# EUROPEAN PATENT SPECIFICATION

(11) **EP 2 353 796 B1**
(45) Date of publication and mention of the grant of the patent: **23.07.2014**
(21) Application number: 11150322.3
(22) Date of filing: 06.01.2011
(51) Int. Cl.: B25J 9/00, B25J 9/16

(54) **Robot system and method of manufacturing a product**
Robotersystem und Verfahren zur Herstellung eines Produkts
Système de robot et procédé de fabrication d'un produit

(30) Priority: 03.02.2010 JP 2010022592
(43) Date of publication of application: 10.08.2011
(73) Proprietor: Kabushiki Kaisha Yaskawa Denki, Kitakyushu-shi, Fukuoka 806-0004 (JP)
(72) Inventor: Hirano, Yusuke, Kitakyushu-Shi Fukuoka 806-0004 (JP); Kawano, Tomoki, Kitakyushu-Shi Fukuoka 806-0004 (JP)
(74) Representative: Gendron, Vincent Christian

(56) References cited:
- GB-A- 781 465
- JP-A- H06 320 364
- JP-A- 2009 148 845

## Description

### RELATED APPLICATIONS

The present application claims priority to Japanese Patent Application No. 2010-022592, filed February 3, 2010. The contents of this application are incorporated herein by reference in their entirety.

### BACKGROUND OF THE INVENTION

### Field of the Invention

The present invention relates to a robot system and a method of manufacturing a product.

### Description of the Related Art

Technologies for automation of operations that have been performed by humans to date have been proposed. For example, it is desirable to automate, using robots, complex operations that have been performed by humans to date, such as assembly of a mechanical product. Japanese Patent Laid-Open Publication No. 2009-000799 discloses a technology for automation of such a human operation.

JP-A-06320364 discloses a robot system comprising a dual arm robot with a hand attached to each arm, a workbench, a tool storage unit and a workpiece component supplier.

GB-A-781465 discloses a manipulating assembling or positioning apparatus comprising two robot arms provided with gripping hands for holding workpieces or other objects, wherein heavy or large workpieces are simultaneously hold by the two gripping hands.

### SUMMARY OF THE INVENTION

However, when performing an assembly operation, it is necessary to grasp and machlne various types of components and fasteners, such as bolts, which make up a product. In order to handle various typ,es of components (including irregularly shaped components or heavy components), it is necessary that a hand of the robot have mechanisms each specializing in handling a specific type of component. As a result, a problem arises in that the structure of the hand becomes complex. A hand having a complex structure is expensive. Moreover, because such a hand has a large size, the area over which the hand interferes with surrounding objects is large. Furthermore, because such a hand is heavy, it is required that the robot be capable of supporting a heavy weight, which causes another problem in that the cost is increased.

To address such problems, the present invention provides a robot system and a method of manufacturing a product that enables operation to be performed on a workpiece with high precision while utilizing existing workspace and facilities for human operation as much as possible.

To this end, there is provided a robot system as defined in claim 1.

Preferably, the robot includes a base that turnably supports the body.

Preferably still, the robot includes an actuator that turns the base and the body.

Preferably yet, each of the first arm and the second arm includes
a first actuator that rotates a first structural member relative to the body,
a second actuator that rotates a second structural member relative to the first structural member around a rotation axis that is perpendicular to a rotation axis of the first actuator,
a third actuator that rotates a third structural member relative to the second structural member around a rotation axis that is perpendicular to the rotation axis of the second actuator,
a fourth actuator that rotates a fourth structural member relative to the third structural member around a rotation axis that is perpendicular to the rotation axis of the third actuator,
a fifth actuator that rotates a fifth structural member relative to the fourth structural member around a rotation axis that is perpendicular to the rotation axis of the fourth actuator,
a sixth actuator that rotates a sixth structural member relative to the fifth structural member around a rotation axis that is perpendicular to the rotation axis of the fifth actuator, and
a seventh actuator that rotates a flange relative to the sixth structural member around a rotation axis that is perpendicular to the rotation axis of the sixth actuator, and wherein the hand is attached to the flange.

Typically, the robot includes a memory that stores motion data for a assembling a product, the motion data being input beforehand, and wherein the operation commander controls the motion of the robot in accordance with the motion data stored in the memory.

The invention also relates to a method of manufacturing a product as defined in claim 6.

### BRIEF DESCRIPTION OF THE DRAWINGS

The present invention will be described in further detail with reference to the accompanying drawings wherein:
Fig. 1 is a schematic layout view illustrating the overall structure of a robot system according to an embodiment of the present invention;
Fig. 2 is a schematic perspective view illustrating the overall structure of the robot system according to the embodiment of the present invention;
Fig. 3 is a schematic perspective view illustrating the overall structure of the robot system according to the embodiment of the present invention; and
Fig. 4 is a flowchart illustrating the operation of the robot system according to the embodiment of the present invention.

### DETAILED DESCRIPTION OF THE EMBODIMENTS

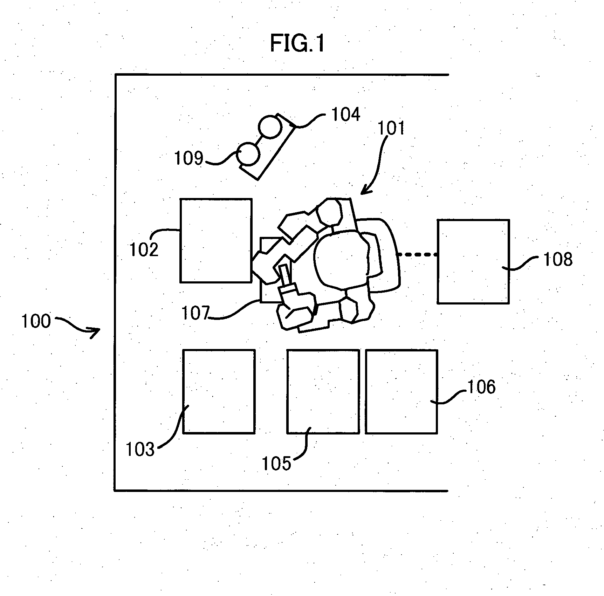

Hereinafter, an embodiment of the present invention will be described with reference to the drawings. In the present embodiment, a cellular manufacturing system 100 is used as an example of an operation system. The cellular manufacturing system 100 makes a predetermined workpiece by machining and assembling four types of workpiece components W1 to W4. As illustrated in Fig. 1, the manufacturing system 100 according to the present embodiment includes a robot 101 (robot device), a stage 102 (workbench), component storage units 103 to 106 (workpiece component supplier), a tool storage unit 109, a bolt feeder 107, and a controller 108.

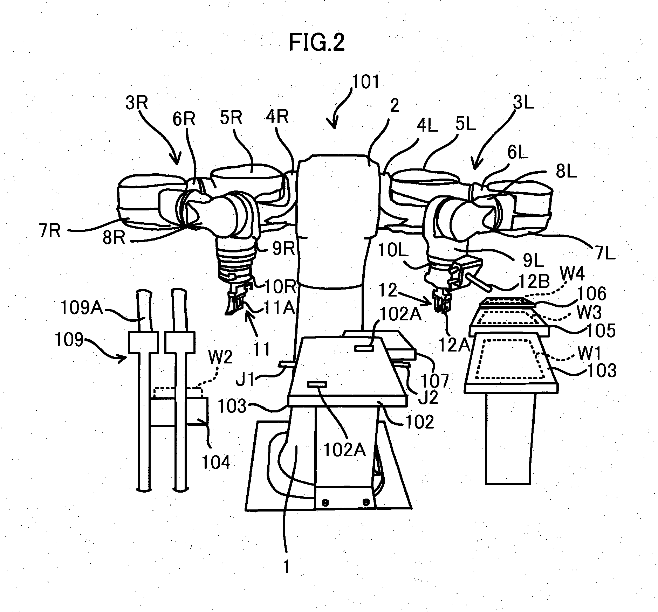

As illustrated in Fig. 2, the stage 102 is a flat table that is disposed in front of the robot 101 (at a position among the first arm, second arm, and a body, which will be described below). A plurality of stoppers, which define the position at which the workpiece component W1 is to be placed, are disposed on the stage 102. The component storage units 103 to 106 respectively store different types of workpiece components W1 to W4, each in multiple quantities. The component storage units 103 to 106 each may be a fixed shelf or may be a vehicle or a conveyer that transfers workpiece components to the manufacturing system 100. The robot 101 assembles the workpiece components W1 to W4 to make a workpiece W, which is a mechanical product. For simplicity, an example using four types of workpiece components is described here. However, the number of types of workpiece component may be appropriately changed in accordance with the assembly operation of the workpiece W.

The tool storage unit 109 stores power tools 109A of various types (such as a screw driver and a drill) and the like. General-purpose power tools that are used by a human can be used. The bolt feeder 107 stores bolts and the like that are used for assembling the workpiece W. In accordance with taught data, the bolt feeder 107 supplies various types of bolts that are required in a corresponding operation step.

The controller 108 is a computer including a memory (not shown), a processor (not shown), and an input device (not shown). The controller is communicatively connected to the robot 101.

Moving parts (turning parts, swinging parts, and hand units) of the robot 101, which will be described below, each include an actuator (not shown) including a servo motor and an encoder, and the encoder sends a signal representing the rotation position of the moving part to the controller 108. Taught data, such as data on operation steps for assembling the workpiece W (to be specific, data on the positions to which the moving parts of the robot 101 are to be moved, and the like) has been input to the controller 108 beforehand through an input device (such as a programming pendant).
When the robot 101 performs an operation, an operation commander of the controller 108 sends motion signals to the moving parts of the robot 101 in accordance with the taught data stored in the memory.

Next, the structure of the robot 101 will be described. As illustrated in Fig. 2, the robot 101 has a base 1 that is fixed to the floor with anchor bolts (not shown). A body 2 is turnably mounted on the base 1 with an actuator therebetween. A right arm 3R (first arm) and a left arm 3L (second arm) are respectively disposed on the right side and on the left side of the body 2. The right arm 3R includes a right shoulder 4R (first structural member) that is attached to the body 2 with an actuator, which rotates around a first rotation axis that is horizontal (parallel to the floor), therebetween. A right upper arm A-portion 5R (second structural member) is attached to the right shoulder 4R with an actuator, which rotates around a second rotation axis that is perpendicular to the first rotation axis, therebetween. A right upper arm B-portion 6R (third structural member) is attached to an end of the right upper arm A-portion 5R with an actuator, which rotates around a third rotation axis that is perpendicular to the second rotation axis, therebetween.

A right lower arm 7R (fourth structural member) is attached to an end of the right upper arm B-portion 6R with an actuator, which rotates around a fourth rotation axis that is perpendicular to the third rotation axis, therebetween. A right wrist A-portion 8R (fifth structural member) is attached to an end of the right lower arm 7R with an actuator, which rotates around a fifth rotation axis that is perpendicular to the fourth rotation axis, therebetween. A right wrist B-portion 9R is attached to an end of the right wrist A-portion 8R with an actuator, which rotates around a sixth rotation axis that is perpendicular to the fifth rotation axis, therebetween. The right wrist A-portion 8R turns to perform a twisting operation, and the right wrist B-portion 9R turns to perform a bending operation. A right flange 10R is attached to an end of the right wrist B-portion 9R. The right flange 10R is rotatable by an actuator around a seventh rotation axis that is perpendicular to the sixth rotation axis. A right hand unit 11 (first hand) is attached to the right flange 10R. The right flange 10R is rotated by a servo motor, and thereby the right hand unit 11 (hand) can be turned and stopped (positioned) at a position that is commanded by the controller 108.

The right hand unit 11 includes an actuator (not shown) that changes the distance between two finger members 11A, so that the right hand unit 11 can grasp an object between the finger members 11A. The right hand unit 11 can also hold an object by inserting the finger members 11A in a hole (or the like) formed in the object, increasing the distance between the finger members 11A, and making the finger members 11A contact the inner surface of the hole.

The left arm 3L and the right arm 3R are horizontally symmetric. The left arm 3L includes a left shoulder 4L, a left upper arm A-portion 5L, a left upper arm B-portion 6L, a left lower arm 7L, a left wrist A-portion 8L, a left wrist B-portion 9L, and a left flange 10L. A left hand unit 12 (hand) is attached to the left flange 10L. As with the right hand unit 11, the left hand unit 12 includes an actuator (not shown) that changes the distance between two finger members 12A, so that the right hand unit 11 can grasp an object between the finger members 12A.

A bolt tool 12B is attached to the left hand unit 12, and extends in a direction substantially perpendicular to the finger members 12A. The bolt tool can take out a bolt from the bolt feeder 107, and screw the bolt into a taught position.

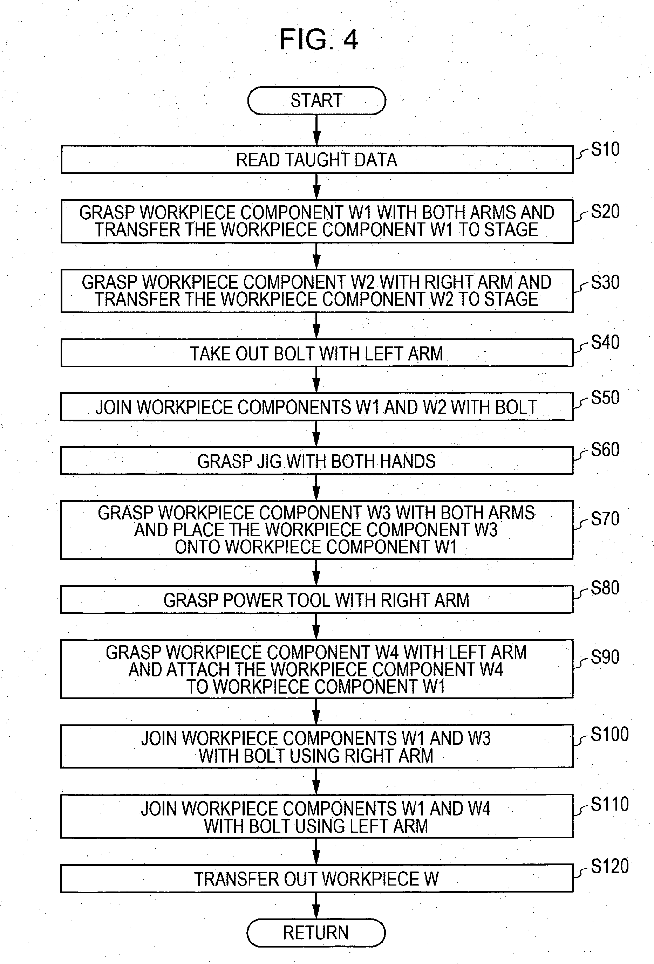

The manufacturing system according to an embodiment of the present invention has the structure described above. Hereinafter, the operation of the robot 101 that is taught by the controller 108, that is, the operation of making the workpiece W, will be described. As illustrated in Fig. 4, in step S10, when the operation starts, the controller 108 reads taught data that is stored in the memory. In step S20, the body 2 is turned relative to the base 1 so that the storage unit 103 is positioned approximately at the center of the left arm 3L and the right arm 3R. The finger members 11A of the right hand unit 11 grasp a predetermined taught position of the workpiece component W1. The finger members 12A of the left hand unit 12 grasp a different position of the workpiece component W1. While the right hand unit 11 and the left hand unit 12 grasp the workpiece component W1, the left arm 3L and the right arm 3R lift the workpiece component W1. The body 2 is turned toward the stage 102, and the workpiece component W1 is placed on the stage 102. The workpiece component W1 is placed at a taught position, and protrusions 102A, which are disposed on the stage 102, prevent the workpiece component W1 from slipping off the stage 102.

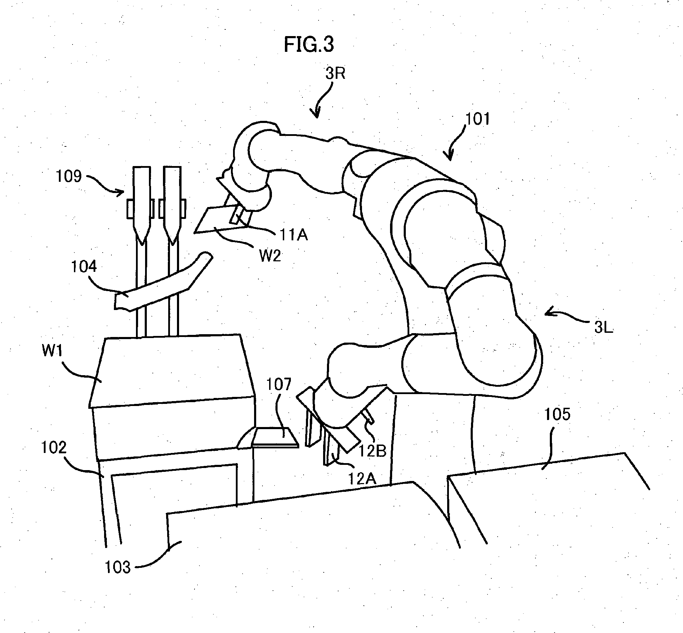

In step S30, the right arm 3R is moved. The right arm 3R grasps the workpiece component W2, which is disposed on the storage unit 104, with the right hand unit 11, and makes the workpiece component W2 be positioned next to a side surface of the workpiece component W1 on the stage 102 so as to contact the side surface. In step S40, which is performed simultaneously with step S30, the left arm 3L is moved toward the bolt feeder 107, and the left hand unit 12 takes out a bolt from the bolt feeder 107 by using the bolt tool 12B. In step S50, the left arm 3L is moved toward the workpiece component W2, which has been positioned by the right hand unit 11. The bolt tool 12B screws the bolt into the workpiece component W2 so that the workpiece component W2 is joined to the workpiece component W1 (see Fig. 3).

In step S60, the right hand unit 11 and the left hand unit 12 respectively grasp hook components J1 and J2 that are disposed on both sides of the stage 102. In step S70, the body 2 is turned toward the storage unit 105. The right hand unit 11 and the left hand unit 12 insert the hook portions of the hook components J1 and J2 into a lower part of the workpiece W3, and support the workpiece W3 with the hook portions. The left arm 3L and the right arm 3R lift the workpiece component W3, the body 2 is turned toward the stage 102, and the workpiece component W3 is positioned and placed on top of the workpiece component W1 on the stage 102.

In step S80, the right arm 3R is moved, and the right arm 3R grasps one of the power tools 109A, which is stored in the tool storage unit 109 and is taught by the controller. In step S90, which is performed simultaneously with step S80, the left arm 3L is moved. The left arm 31 grasps a taught position of the workpiece component W4 on the storage unit 106, and fits the workpiece component W4 into a fitting portion of the workpiece component W1 on the stage 102 (so as to be temporarily joined). When step S80 is finished, the right arm 3R takes out a bolt from the bolt feeder 107 by using an end of the power tool 109A, and joins the workpiece component W3 placed on the workpiece component W1 to the workpiece W1 with the bolt (step S100).

When step S90 is finished, the left arm 3L is moved toward the bolt feeder 107, and the left arm 3L takes out a bolt from the bolt feeder 107 by using the bolt tool 12B of the left hand unit 12, and joins the workpiece component W4 to the workpiece component W1 with the bolt (step S110). Thereafter, the workpiece W, which has been made by assembling the workpiece components W1 to W4, is transferred from the stage 102 to a transfer path (not shown), and the operations are repeated from step S10.

As described above, the manufacturing system according to the present embodiment has a structure that is similar to the upper body of a human in that the robot 101 has a body (the base 1 and the body 2) and arms disposed on both sides of the body. Therefore, the robot 101 can be used in an existing workspace that is designed for human operation without changing existing facilities such as the component storage units 103 to 106, the tool storage unit 109, and the bolt feeder 107. Accordingly, the cost for automating the operation can be reduced.

The workpiece components that are light or small (W2 and W4) are transferred only with one of the right arm 3R or the left arm 3L while the other arm performs another operation. The workpiece component that is heavy and large (W1) is transferred by the right arm 3R and the left arm 3L in cooperation, so that, even if each of the right arm 3R and the left arm 3L has a small maximum payload (i.e., a small size), the heavy workpiece component can be transferred with high precision. The workpiece that cannot be grasped with the finger members (W3) is supported by grasping the hook components J1 and J2 with the finger members and by operating the right arm 3R and the left arm 3L in cooperation by using a jig. Thus, workpiece components having various shapes can be transferred by providing the manufacturing system 100 with a simple jig, instead of making the structure complex by providing the hand units 11 and 12 with a special jig or a chuck mechanism.

A robot system and a method of manufacturing a mechanical product according to the present invention are not limited to those of the embodiment described above. The embodiment can be modified in various ways within the scope of the present invention set forth in the appended claims.

## Claims

1. A robot system (100) comprising:
a robot (101) including
a body (2),
a first arm (3R) attached to the body, the first arm including a plurality of joints,
a second arm (3L) attached to the body, the second arm being independent of the first arm and including a plurality of joints, and
a hand (11, 12) attached to each of the first arm and the second arm;
a controller (108) that controls motion of the robot;
a workbench (102) on which the robot performs an operation on a workpiece (W); and
a workpiece component supplier (103, 104, 105, 106) disposed around the robot, the workpiece component supplier supplying a plurality of types of workpiece components (W1, W2, W3, W4) each of which is a component of the workpiece,
a tool storage unit (109) storing at least a first tool (109a) disposed near the robot (101);
wherein the controller includes an operation commander that performs control so that the robot transfers at least one of the plurality of types of workpiece components from the workpiece component supplier to the workbench by simultaneously holding each of the workpiece components with both the hand of the first arm and the hand of the second arm, and transfers remaining types of workpiece components from the workpiece component supplier to the workbench by holding each of the workpiece components with only one of the hand of the first arm and the hand of the second arm, and so that
the robot grasps the first tool (109a) with the hand of the first arm or the hand of the second arm and performs an assembly operation on the plurality of types of workpiece components by using the first tool, and so that:
the robot simultaneously performs the operation of transferring a workpiece component by holding the workpiece component with only one of the hand of the first arm and the hand of the second arm and the operation of grasping the first tool with the other of the hand of the first arm and the hand of the second arm.

2. The robot system according to claim 1, wherein the robot includes a base (1) that turnably supports the body.

3. The robot system according to claim 2, wherein the robot includes an actuator that turns the base and the body.

4. The robot system according to any one of claims 1 to 3, wherein each of the first arm and the second arm includes
a first actuator that rotates a first structural member (4R, 4L) relative to the body,
a second actuator that rotates a second structural member (5R, 5L) relative to the first structural member around a rotation axis that is perpendicular to a rotation axis of the first actuator,
a third actuator that rotates a third structural member (6R, 6L) relative to the second structural member around a rotation axis that is perpendicular to the rotation axis of the second actuator,
a fourth actuator that rotates a fourth structural member (7R, 7L) relative to the third structural member around a rotation axis that is perpendicular to the rotation axis of the third actuator,
a fifth actuator that rotates a fifth structural member (8R, 8L) relative to the fourth structural member around a rotation axis that is perpendicular to the rotation axis of the fourth actuator,
a sixth actuator that rotates a sixth structural member (9R, 9L) relative to the fifth structural member around a rotation axis that is perpendicular to the rotation axis of the fifth actuator, and
a seventh actuator that rotates a flange (10R, 10L) relative to the sixth structural member around a rotation axis that is perpendicular to the rotation axis of the sixth actuator, and
wherein the hand is attached to the flange.

5. The robot system according to any one of claims 1 to 4, wherein the robot includes a memory that stores motion data for a assembling a product, the motion data being input beforehand, and wherein the operation commander controls the motion of the robot in accordance with the motion data stored in the memory.

6. A method of manufacturing a product comprising:
preparing a plurality of types of workpiece components in a workpiece component supplier (103-106) that is disposed around a robot (101), the robot including a body (2), a first arm (3R) attached to the body, the first arm including a plurality of joints, a second arm (32) attached to the body, the second arm being independent of the first arm and including a plurality of joints, and a hand (11,12) attached to each of the first arm and the second arm;
providing a tool storage unit (109) storing at least a first tool (109a) disposed near the robot (101);
transferring at least one of the plurality of types of workpiece components from the workpiece component supplier to a workbench (102) by simultaneously holding each of the workpiece components with both the hand of the first arm and the hand of the second arm, the workbench being disposed in front of the robot;
transferring remaining types of workpiece components from the workpiece component supplier to the workbench by holding each of the workpiece components with only one of the hand of the first arm and the hand of the second arm;
grasping the first tool (109a) with the hand of the first arm or the hand of the second arm, and assembling the workpiece components on the workbench using the first arm and the second arm; and
simultaneously performing the operation of transferring a workpiece component by holding the workpiece component with only one of the hand of the first arm and the hand of the second arm, and the operation of grasping the first tool with the other of the hand of the first arm and the hand of the second arm.

## Patentansprüche

1. Robotersystem (100) umfassend:
einen Roboter (101) mit
einem Körper (2),
einem an dem Körper angebrachten ersten Arm (3R), wobei der erste Arm eine Vielzahl von Gelenken beinhaltet,
einem an dem Körper angebrachten zweiten Arm (3L), wobei der zweite Arm unabhängig von dem ersten Arm ist und eine Vielzahl von Gelenken beinhaltet, und
jeweils einer an dem ersten Arm und dem zweiten Arm angebrachten Hand (11, 12);
einen Kontroller (108), der die Bewegung des Roboters steuert;
einen Arbeitstisch (102), auf dem der Roboter eine Operation an einem Werkstück (W) durchfährt; und
eine um den Roboter angeordnete Werkstückkomponentenbereitstellung (103, 104, 105, 106); wobei die Werkstückkomponentenbereitstellung eine Vielzahl von Typen von Werkstückkomponenten (W1, W2, W3, W4) bereitstellt, von denen jede eine Komponente des Werkstücks ist,
eine nahe dem Roboter (101) angeordnete Werkzeuglagereinheit (109), die mindestens ein erstes Werkzeug (1 09a) lagert;
wobei der Kontroller eine Operationssteuerung beinhaltet, welche die Steuerung durchführt, so dass der Roboter mindestens eine der Vielzahl an Typen von Werkstückkomponenten von der Werkstückkomponentenbereitstellung zu dem Arbeitstisch durch simultanes Halten jeder Werkstückkomponente mit sowohl der Hand des ersten Arms als auch der Hand des zweiten Arms transportiert, und übrige Typen von Werkstückkomponenten von der Werkstückkomponentenbereitstellung zu dem Arbeitstisch durch Halten jeder Werkstückkomponente nur mit der Hand des ersten Arms oder der Hand des zweiten Arms transportiert, und so dass
der Roboter das erste Werkzeug (109a) mit der Hand des ersten Arms oder der Hand des zweiten Arms greift und eine Zusammenbauoperation an einer Vielzahl von Typen von Werkstückkomponenten unter Verwendung des ersten Werkzeugs durchführt, und so dass
der Roboter simultan die Operation des Transportierens einer Werkstückkomponente durch Halten der Werkstückkomponente nur mit der Hand des ersten Armes oder der Hand des zweiten Arms und die Operation des Greifens des ersten Werkzeugs mit der anderen Hand des ersten Arms oder des zweiten Arms durchführt.

2. Robotersystem nach Anspruch 1, wobei der Roboter eine Basis (1) beinhaltet, die drehbar den Körper trägt.

3. Robotersystem nach Anspruch 2, wobei der Roboter einen Aktuator beinhaltet, der die Basis und den Körper dreht.

4. Robotersystem nach einem der Ansprüche 1 bis 3, wobei sowohl der erste Arm als auch der zweite Arm beinhalten
einen ersten Aktuator, der ein erstes Strukturteil (4R, 4L) relativ zu dem Körper dreht,
einen zweiten Aktuator, der ein zweites Strukturteil (5R, 5L) relativ zu dem ersten Strukturteil um eine Rotationsachse dreht, die rechtwinklig zu der Rotrationsachse des ersten Aktuators ist,
einen dritten Aktuator, der ein drittes Strukturteil (6R, 6L) relativ zu dem zweiten Strukturteil um eine Rotationsachse dreht, die rechtwinklig zu der Rotationsachse des zweiten Aktuators ist,
einen vierten Aktuator, der ein viertes Strukturteil (7R, 7L) relativ zu dem dritten Strukturteil um eine Rotationsachse dreht, die rechtwinklig zu der Rotationsachse des dritten Aktuators ist,
einen fünften Aktuator, der ein fünftes Strukturteil (8R, 8L) relativ zu dem vierten Strtikturteil um eine Rotationsachse dreht, die rechtwinklig zu der Rotationsachse des vierten Aktuators ist,
einen sechsten Aktuator, der ein sechstes Strukturteil (9R, 9L) relativ zu dem fünften Strukturteil um eine Rotationsachse dreht, die rechtwinklig zu der Rotationsachse des fünften Aktuators ist, und
einen siebten Aktuator, der einen Flansch (10R, 10L) relativ zu dem sechsten Strukturteil um eine Rotationsachse dreht, die rechtwinklig zu der Rotationsachse des sechsten Aktuators ist, und
wobei die Hand an dem Flansch angebracht ist.

5. Robotersystem nach einem der Ansprüche 1 bis 4, wobei der Roboter einen Speicher beinhaltet, der Bewegungsdaten für den Zusammenbau eines Produkts speichert, wobei die Bewegungsdaten zuvor eingegeben werden, und wobei die Operationssteuerung die Bewegung des Roboters gemäß den in dem Speicher gespeicherten Bewegungsdaten steuert.

6. Verfahren zur Herstellung eines Produkts umfassend:
Vorbereiten einer Vielzahl von Typen von Werkstückkomponenten in einer Werkstückkomponentenbereitstellung (103-106), die um den Roboter (101) angeordnet ist, wobei der Roboter einen Körper (2), einen an dem Körper angebrachten ersten Arm (3R), der eine Vielzahl von Gelenken beinhaltet, einen an dem Körper angebrachten zweiten Arm (3L), der unabhängig von dem ersten Arm ist und eine Vielzahl von Gelenken beinhaltet, und sowohl eine an dem ersten Arm als auch eine an dem zweiten Arm angebrachte Hand (11, 12) beinhaltet;
Bereitstellen einer nahe des Roboters (101) angeordneten Werkzeuglagereinheit (109), die mindestens ein erstes Werkzeug (109a) lagert;
Transportieren von mindestens einer aus der Vielzahl von Typen von Werkstückkomponenten von der Werkstückkomponentenbereitstellung zu einem Arbeitstisch (102) durch simultanes Halten jeder Werkstückkomponente mit sowohl der Hand des ersten Arms als auch der Hand des zweiten Arms, wobei der Arbeitstisch vor dem Roboter angeordnet ist;
Transportieren von übrigen Typen von Werkstückkomponenten von der Werkstückkomponentenbereitstellung zu dem Arbeitstisch durch Halten jeder Werkstückkomponente nur mit der Hand des ersten Arms oder der Hand des zweiten Arms;
Greifen des ersten Werkzeugs (109a) mit der Hand des ersten Arms oder der Hand des zweiten Arms, und Zusammenbauen der Werkstückkomponenten auf dem Arbeitstisch unter Verwendung des ersten Arms und des zweiten Arms; und
simultanes Durchführen der Operation des Transportierens einer Werkstückkomponente durch Halten der Werkstückkomponente nur mit der Hand des ersten Arms oder der Hand des zweiten Arms und der Operation des Greifens des ersten Werkzeugs mit der anderen Hand des ersten Arms oder des zweiten Arms.

## Revendications

1. Système robotisé (100) comprenant :
un robot (101) incluant
un corps (2),
un premier bras (3R) fixé au corps, le premier bras incluant une pluralité d'articulations,
un second bras (3L) fixé au corps, le second bras étant indépendant du premier bras et incluant une pluralité d'articulations, et
une main (11, 12) fixée à chacun du premier bras et du second bras ;
une unité de commande (108) qui commande un mouvement du robot ;
un banc de travail (102) sur lequel le robot réalise une opération sur une pièce à travailler (W) ; et
un distributeur de composants de pièce à travailler (103, 104, 105, 106) disposé autour du robot, le distributeur de composants de pièce à travailler distribuant une pluralité de types de composants de pièce à travailler (W1, W2, W3, W4) dont chacun est un composant de la pièce à travailler,
une unité de stockage d'outil (109) stockant au moins un premier outil (109a) disposée près du robot (101) ;
dans lequel l'unité de commande inclut une unité de direction d'opération qui réalise une commande de sorte que le robot transfère au moins l'un de la pluralité de types de composants de pièce à travailler du distributeur de composants de pièce à travailler au banc de travail en maintenant simultanément chacun des composants de pièce à travailler avec à la fois la main du premier bras et la main du second bras, et transfère des types restants de composants de pièce à travailler du distributeur de composants de pièce à travailler au banc de travail en maintenant chacun les composants de pièce à travailler avec uniquement l'une de la main du premier bras et la main du second bras, et de sorte que
le robot saisisse le premier outil (109a) avec la main du premier bras ou la main du second bras et réalise une opération d'assemblage sur la pluralité de types de composants de pièce à travailler en utilisant le premier outil, et de sorte que :
le robot réalise simultanément l'opération de transfert d'un composant de pièce à travailler en maintenant le composant de pièce à travailler avec uniquement l'une de la main du premier bras et la main du second bras et l'opération de saisie du premier outil avec l'autre de la main du premier bras et la main du second bras.

2. Système robotisé selon la revendication 1, dans lequel le robot inclut une base (1) qui supporte en pivotement le corps.

3. Système robotisé selon la revendication 2, dans lequel le robot inclut un actionneur qui fait pivoter la base et le corps.

4. Système robotisé selon l'une quelconque des revendications 1 à 3, dans lequel chacun du premier bras et du second bras inclut
un premier actionneur qui met en rotation un premier organe structural (4R, 4L) par rapport au corps,
un deuxième actionneur qui met en rotation un deuxième organe structural (5R, 5L) par rapport au premier organe structural autour d'un axe de rotation qui est perpendiculaire à un axe de rotation du premier actionneur,
un troisième actionneur qui met en rotation un troisième organe structural (6R, 6L) par rapport au deuxième organe structural autour d'un axe de rotation qui est perpendiculaire à l'axe de rotation du deuxième actionneur,
un quatrième actionneur qui met en rotation un quatrième organe structural (7R, 7L) par rapport au troisième organe structural autour d'un axe de rotation qui est perpendiculaire à l'axe de rotation du troisième actionneur,
un cinquième actionneur qui met en rotation un cinquième organe structural (8R, 8L) par rapport au quatrième organe structural autour d'un axe de rotation qui est perpendiculaire à l'axe de rotation du quatrième actionneur,
un sixième actionneur qui met en rotation un sixième organe structural (9R, 9L) par rapport au cinquième organe structural autour d'un axe de rotation qui est perpendiculaire à l'axe de rotation du cinquième actionneur, et
un septième actionneur qui met en rotation une bride (10R, 10L) par rapport au sixième organe structural autour d'un axe de rotation qui est perpendiculaire à l'axe de rotation du sixième actionneur, et
dans lequel la main est fixée à la bride.

5. Système robotisé selon l'une quelconque des revendications 1 à 4, dans lequel le robot inclut une mémoire qui stocke des données de mouvement pour assembler un produit, les données de mouvement étant entrées au préalable, et dans lequel l'unité de direction d'opération commande le mouvement du robot en conformité avec les données de mouvement stockées dans la mémoire.

6. Procédé de fabrication d'un produit comprenant :
la préparation d'une pluralité de types de composants de pièce à travailler dans un distributeur de composants de pièce à travailler (103 à 106) qui est disposé autour d'un robot (101), le robot incluant un corps (2), un premier bras (3R) fixé au corps, le premier bras incluant une pluralité d'articulations, un second bras (3L) fixé au corps, le second bras étant indépendant du premier bras et incluant une pluralité d'articulations, et une main (11, 12) fixée à chacun du premier bras et du second bras ;
la fourniture d'une unité de stockage d'outil (109) stockant au moins un premier outil (109a) disposé près du robot (101) ;
le transfert d'au moins l'un de la pluralité de types de composants de pièce à travailler du distributeur de composants de pièce à travailler à un banc de travail (102) en maintenant simultanément chacun des composants de pièce à travailler avec à la fois la main du premier bras et la main du second bras, le banc de travail étant disposé devant le robot ;
le transfert de types restants de composants de pièce à travailler du distributeur de composants de pièce à travailler au banc de travail en maintenant chacun des composants de pièce à travailler avec uniquement l'une de la main du premier bras et la main du second bras ;
la saisie du premier outil (109a) avec la main du premier bras ou la main du second bras, et l'assemblage des composants de pièce à travailler sur le banc de travail à l'aide du premier bras et du second bras ; et
la réalisation simultanée de l'opération de transfert d'un composant de pièce à travailler en maintenant le composant de pièce à travailler avec uniquement l'une de la main du premier bras et la main du second bras, et l'opération de saisie du premier outil avec l'autre de la main du premier bras et la main du second bras.
